Europäisches Patentamt

European Patent Office

Office européen des brevets

(11) Veröffentlichungsnummer: **0 499 774 A1**

(12) **EUROPÄISCHE PATENTANMELDUNG**

(21) Anmeldenummer: **92100184.8**

(22) Anmeldetag: **08.01.92**

(51) Int. Cl.5: **C08F 251/00,** //(C08F251/00, 220:06)

(30) Priorität: **19.02.91 DE 4105000**

(43) Veröffentlichungstag der Anmeldung:
**26.08.92 Patentblatt 92/35**

(84) Benannte Vertragsstaaten:
**AT BE CH DE ES FR GB IT LI NL SE**

(71) Anmelder: **STARCHEM GMBH**
**George-C.-Marshall-Strasse 210**
**W-4150 Krefeld 12(DE)**

(72) Erfinder: **Heidel, Klaus, Dr.**
**Veilchenstrasse 10**
**W-4370 Marl(DE)**
Erfinder: **Zimmermann, Frank, Dr.**
**Walter-Wenthe-Strasse 67**
**W-4350 Recklinghausen(DE)**

(54) **Verfahren zur Herstellung von feinteiligen, wasserquellbaren Polysaccharid-Pfropfpolymeren.**

(57) Bei einem Verfahren zur Herstellung von feinteiligen, wasserquellbaren Polysaccharid-Pfropfpolymeren durch inverse Suspensionspolymerisation von 5 bis 40 Teilen Polysaccharid und 95 bis 60 Teilen einer olefinisch ungesättigten Carbonsäure werden ein hydrophobes Lösemittel, das 0 bis 25 % des Polysaccharids enthält, bei 40 bis 100 °C vorgelegt und eine wäßrige Phase, die die olefinisch ungesättigte Carbonsäure, Polymerisationsinitiator und 100 bis 75 % des Polysaccharids enthält, zudosiert.

EP 0 499 774 A1

Die Erfindung betrifft ein neues Verfahren zur Herstellung von feinteiligen, porösen und schnell wasserquellbaren Polysaccharid-Pfropfpolymeren. Diese Polymere werden durch inverse Suspensionspolymerisation und Vernetzung hergestellt.

Wasserabsorbierende Polymere finden vielfältige Verwendung auf dem Sanitär- und Hygienesektor als Wasserabsorptionsmittel in Wegwerfwindeln und Papiertüchern, als Tampons, Krankenunterlagen, Elektrolytverdickern in Trockenbatterien, als Feuchthaltemittel oder Wasserspeicher in der Landwirtschaft und als Trocknungsmittel.

Geeignete Polymere sind derivatisierte, meist mit wasserlöslichen Vinylmonomeren gepfropfte Polysaccharide, wie Carboxymethylcellulose, hydrolysierte Stärke-Acrylnitril-Pfropfpolymere, Acrylsäure-Stärke-Pfropfpolymere, oder vollsynthetische, schwach vernetzte Polymere, wie teilvernetzte Polyacrylsäuresalze oder teilvernetzte Polymaleinsäurederivate.

Der Einbau von Stärke in wasserquellbare Pfropfpolymere ermöglicht im Vergleich zu vollsynthetischen Polymeren die Einstellung von besonderen Produkteigenschaften. So werden die Porosität der Polymerteilchen erhöht, die Absorptionsgeschwindigkeit gesteigert und die biologische Abbaubarkeit verbessert.

Die Herstellung der Pfropfpolymeren durch Direktpfropfung von Stärke mit Acrylat in wäßriger Lösung ist technisch nicht einfach. Um die für die Pfropfung erforderliche, möglichst homogene Verteilung von Stärke in der wäßrigen Monomerlösung zu erzielen, ist eine vorangehende Quellung der Stärke erforderlich. Hierdurch steigt die Viskosität der Monomerlösung erheblich, wobei man beim Einsatz von mehr als ca. 10 % Stärke eine pastenähnliche Konsistenz erhält.

Aus der DE-C 26 12 846 ist die Herstellung von wasserabsorbierenden Pfropfpolymeren durch Aufpfropfen von wasserlöslichen Monomeren, wie Acrylsäure, auf Stärke in Gegenwart eines Quervernetzungsmittels bekannt. Die Pfropfreaktion wird in wäßriger Lösung oder in wäßrig-alkoholischem Medium als sogenannte Fällungspolymerisation durchgeführt. Bei diesem Verfahren entstehen bei der Pfropfung in wäßriger Lösung gummiartige, nicht rührfähige Gele, aus denen erst durch Trocknung und Mahlung pulverförmige Endprodukte erhalten werden. Führt man dagegen die Pfropfung als Fällungspolymerisation in Gegenwart eines etwa 20fa-chen Überschusses an Alkohol als Fällmittel durch, entstehen feinteilige Produkte mit nur mäßigem Flüssigkeitsabsorptionsvermögen.

Nach der japanischen Patentschrift 80/139 408 kann durch Polymerisation von Acrylnitril in wäßrigem Medium in Gegenwart von Stärke ein Pfropfpolymer hergestellt werden, das anschließend hydrolysiert und vernetzt werden kann. Man erhält ein Pulver mit einer Wasserabsorptionsfähigkeit von 150 bis 180 ml/g.

Feinteilige wasserabsorbierende Polymere können durch Polymerisation von teilneutralisierter Acrylsäure in inverser Suspension, auch Umkehrphasen-Suspension genannt, hergestellt werden. Hierbei wird ein wasserlösliches Monomeres in Form einer wäßrigen Lösung in einem hydrophoben Medium in Gegenwart eines Dispergiermittels emulgiert und zu einem feinteiligen Endprodukt polymerisiert. Bei Anwesenheit eines Polysaccharids, wie Stärke, können dabei wasserlösliche oder wasserunlösliche, quellfähige Pfropfpolymere erhalten werden.

Eine Pfropfpolymerisation in inverser Suspension wird in der japanischen Patentschrift 80/161 813 angegeben. Dabei wird zunächst eine Mischung aus n-Hexan mit Sorbitanmonostearat, Stärke, Wasser, Acrylsäure, Natronlauge und wasserlöslichem Initiator angesetzt, bevor man durch Erwärmen die Polymerisation einleitet. Das Reaktionsprodukt neigt hier jedoch während der Polymerisation zur Verklumpung und fällt nicht feinteilig an.

Nach DE-C-28 40 010 können wasserlösliche Polysaccharid-Pfropfpolymere durch inverse Suspensionspolymerisation hergestellt werden, wobei man einen batch-Prozeß bevorzugt. Dabei wird zunächst ein Polysaccharid in Gegenwart eines grenzflächenaktiven Mittels in einem mit Wasser nicht mischbaren Lösemittel suspendiert. Anschließend wird eine wäßrige Monomerlösung, die überwiegend Acrylamid oder ein kationisches Monomer enthält und in geringen Mengen auch Acrylsäure aufweisen kann, bei Raumtemperatur zugegeben. Nach Zusatz eines Initiators wird erwärmt und polymerisiert. Die Feststoffgehalte, bezogen auf die wäßrige Polymerisationsmischung, liegen bei über 50 %.

Hier werden keine Vernetzungsmittel eingesetzt und keine wasserquellbaren gelartigen Polymere erhalten. Das angegebene ansatzweise Herstellverfahren führt zu Beginn der Polymerisation zu Temperaturspitzen, die bei großen Ansätzen schwer zu beherrschen sind.

In EP-B-0 083 022 wird Acrylsäure in Gegenwart von Stärke in wäßriger Lösung polymerisiert. Die Produkte können dann in einem inerten Lösemittel in Gegenwart von 0,01 bis 1,3 Teilen Wasser pro Teil Harz vernetzt werden. Die Herstellung der Stärke-Pfropfpolymere erfolgt bei einem Feststoffgehalt von nur 20 %. Außerdem weisen diese StärkePfropfpolymere - vernetzt oder unvernetzt - nur eine geringe Wasserabsorptionsfähigkeit auf.

Gemäß DE-A-38 01 633 werden Polysaccharid-Pfropfpolymere durch inverse Suspensionspolymerisation, Teilentwässerung und Vernetzung hergestellt. Die inverse Suspensionspolymerisation wird einstufig und diskontinuierlich durchgeführt, indem zunächst alle Reaktionskomponenten zusammengegeben werden und dann die Polymerisation durch Erhitzen in Gegenwart eines Initiators eingeleitet wird. Dabei wird zu Beginn der Polymerisation Wärme schlagartig frei. In technischen Produktionsreaktoren ist eine ausreichend schnelle Abfuhr der Polymerisationswärme oft nur schwer zu gewährleisten.

Aufgabe der vorliegenden Erfindung war es, bei Polysaccharid-Pfropfpolymeren, die aus 5 bis 40 Gewichtsteilen Polysaccharid und 95 bis 60 Gewichtsteilen einer olefinisch ungesättigten Carbonsäure hergestellt werden, die Feinteiligkeit und die Saugkraft für Urin zu verbessern. Auch sollte ein hohes Maß an Flüssigkeitsrückhaltevermögen erreicht werden.

Diese Aufgabe wird überraschend dadurch gelöst, daß man eine inverse Suspensionspolymerisation durchführt, bei der man ein hydrophobes Lösemittel, das 0 bis 25 Gewichtsprozent des Polysaccharids dispergiert enthält, bei 40 bis 100 °C vorlegt und eine wäßrige Phase, die die olefinisch ungesättigte Carbonsäure, Polymerisationsinitiator und 100 bis 75 Gewichtsprozent des Polysaccharids enthält, zudosiert.

Für die inverse Suspensionspolymerisation werden vorzugsweise 10 bis 20 Gewichtsteile Polysaccharid eingesetzt, wobei man bevorzugt 2 bis 20 Gewichtsprozent des Polysaccharids in dem hydrophoben Lösemittel dispergiert und 98 bis 80 Gewichtsprozent des Polysaccharids über die wäßrige Phase zuführt.

Für das erfindungsgemäße Verfahren geeignete Polysaccharide sind Stärken, Stärkederivate sowie Cellulosederivate. Dabei werden Stärken bevorzugt. Es können native Stärken aus Kartoffeln, Mais, Weizen, Reis oder Tapiocawurzeln, ferner Wachsmais oder High-Amylose-Stärke sowie deren Derivate, wie beispielsweise Stärkeether und -ester, eingesetzt werden. Geeignet sind ferner dünnkochende Stärken, die meist aus schwach hydrolytisch oder oxidativ abgebauten Stärken bestehen. Dabei werden Stärken mit einer Viskosität von 20 bis 25 000 mPa s, gemessen an einer 10%igen Paste bei 20 °C, bevorzugt.

Als hydrophobes Lösemittel für die organische Phase können Ether, Halogenkohlenwasserstoffe oder Kohlenwasserstoffe mit 6 bis 12 C-Atomen eingesetzt werden. Vorzugsweise verwendet man aliphatische oder alicyclische Kohlenwasserstoffe, wie Cyclohexan, n-Hexan, $C_8$-Isoparaffine oder technische Benzinfraktionen, wie Normalbenzin, Ligroin, Testbenzin oder Solventnaphtha, mit einem Aromatenanteil bis zu 20 % und einem Siedepunkt im Bereich von 50 bis 200 °C. Das Gewichtsverhältnis von organischer Phase zur wäßrigen Lösung beträgt meist 1,3 : 1 bis 4 : 1.

Als Dispergiermittel wird vorzugsweise ein nichtionisches Tensid mit einem Hydrophil-Lipophil-Gleichgewicht (HLB-Wert) von 0,5 bis 10, das in dem organischen Lösemittel mindestens teilweise löslich sein soll, verwendet. Geeignet sind beispielsweise lipophile Sorbitanester, wie Sorbitanmonolaurat, Sorbitanmonopalmitat oder Sorbitanmonooleat.

Außerdem können auch Polyetherester, wie Polyethylenglykol(200)-mono-oleat, Polyethylenglykol(200)-monolaurat oder Polyethylenglykol(300)-oleat, gut eingesetzt werden. Man kann auch Celluloseether, wie Ethylcellulose, oder Ethylhydroxyethylcellulose verwenden.

Vorteilhaft ist die Mitverwendung eines überwiegend wasserlöslichen, nichtionischen Dispergiermittels mit einem HLB-Wert von 10,5 bis 20. Derartige Stoffe sind beispielsweise wasserlösliche Polyethylenglykole mit einem Molekulargewicht von 200 bis 20 000, insbesondere von 400 bis 5 000, ferner Polyethylenglykolether aus einem aliphatischen einwertigen Alkohol mit 6 bis 20 C-Atomen und einem Polyethylenglykol mit 3 bis 30, insbesondere mit 4 bis 20 Ethylenoxideinheiten. Geeignet sind auch handelsübliche $C_{12}$-Fettalkoholpolyglykolether mit 7 bis 19 Ethylenoxideinheiten und einem HLB-Wert von 13 bis 18. Geeignet sind ferner Polyoxyethylen-Sorbitanfettsäureester, wie beispielsweise Polyoxyethylen-Sorbitanmonolaurat oder Polyoxyethylen-Sorbitanmonooleat.

In einer bevorzugten Ausführungsform besteht die Dispergiermittelmischung aus 50 bis 90 Gewichtsprozent nichtionischem Tensid mit einem HLB-Wert von 0,5 bis 10 und aus 10 bis 50 Gewichtsprozent nichtionischem Tensid mit einem HLB-Wert von 10,5 bis 20.

Der Anteil der Dispergiermittelmischung beträgt 1 bis 10 Gewichtsprozent, bezogen auf das Gewicht der olefinisch ungesättigten Carbonsäure. Dabei werden vorzugsweise 10 bis 60 Gewichtsprozent der Dispergiermittelmischung in der organischen Phase vorgelegt und 90 bis 40 Gewichtsprozent mit der wäßrigen Phase zudosiert.

Die olefinisch ungesättigten Carbonsäuren weisen 3 bis 10 Kohlenstoffatome auf. Beispiele dafür sind Acrylsäure, Methacrylsäure, Crotonsäure, Tiglin- oder Angelicasäure. Vorzugsweise werden Acryl- und Methacrylsäure eingesetzt. Die Säuren können mit Alkali- oder Ammoniumhydroxidlösungen neutralisiert oder teilneutralisiert sein. Dabei wird vorzugsweise Natronlauge eingesetzt. Acrylsäure und Methacrylsäure, die zu 50 bis 90 % neutralisiert sind, werden ganz besonders bevorzugt. Die wäßrigen Lösungen der ungesättigten Carbonsäuren weisen einschließlich des Polysaccharid-Anteils meist einen Feststoffgehalt im Bereich von 20 bis 80 % auf.

Neben den ungesättigten Carbonsäuren können bis zu 20 Gewichtsteile weitere, olefinisch ungesättigte

EP 0 499 774 A1

Monomere, wie Acrylamid, Methacrylamid, Na-Salz von 2-Acrylamido-2-methylpropansulfonsäure, 2-Methacryloylethansulfonsäure, 2-Hydroxyethylacrylat, 2-Hydroxyethylmethacrylat, N.N-Dimethylaminoethylacrylat oder -methacrylat oder dessen quaternäre Ammoniumsalze, in Form ihrer wäßrigen Lösung für die Polymerisation verwendet werden.

Die wäßrige Phase, die zur Polymerisation der vorgelegten Polysaccharid-Suspension zugegeben wird, kann auch bis zu 2 Gewichtsteile vollständig oder überwiegend wasserlösliche Quervernetzungsmittel enthalten. Geeignet sind Vinylverbindungen, wie N.N-Methylen-bis-acrylamid, Butandiol-1.4-di(meth)acrylat, Ethandioldi(meth)acrylat, Diallylmaleinat, Glycidyl(meth)acrylat, Allylmethacrylat, Polyethylenglykol(450)-dimethacrylat,oder Polyepoxide, wie beispielsweise Ethylenglykoldiglycidylether, Polyethylenglykoldiglycidylether, Glycerintriglycidylether oder Diglycerintetraglycidylether.

Die wäßrige Phase kann auch bis zu 20 Gewichtsteile hydrophobes Lösemittel enthalten.

Für die Pfropfpolymerisation werden übliche Polymerisationsinitiatoren verwendet. Geeignet sind beispielsweise Ammonium-, Natrium- oder Kaliumperoxodisulfat und entsprechende Peroxomonosulfate, Dibenzoylperoxid, Dilauroylperoxid, Di-2-ethylhexylperoxodicarbonat, Dicyclohexylperoxodicarbonat, tert.-Butylperpivalat, tert.-Butylperbenzoat, tert.-Butylpermaleinat, tert.-Butylhydroperoxid, Di-tert.-butylperoxid, Wasserstoffperoxid sowie Redox-Katalysatoren, wobei als reduzierende Komponente Ascorbinsäure, Natriummethylsulfinat, Dinatriumsulfit und Natriumhydrogensulfit in Betracht kommen. Außerdem eignen sich Azostarter, wie Azo-bis-isobutyronitril, 2.2-Azo-bis-(2-amidinopropan)-dihydrochlorid, 2.2'-Azo-bis-(4-cyanopentacarbonsäure) und 2-Carbamoylazoisobutyronitril.

Die Initiatoren können in der wäßrigen Phase der ungesättigten Carbonsäure zu der Polysaccharid-Suspension zugegeben werden. Man kann sie aber auch mit Vorteilen als getrennte wäßrige Lösung zudosieren. Man kann auch einen Teil des Initiators in der organischen Phase vorlegen und einen anderen Teil mit der wäßrigen Phase der ungesättigten Carbonsäure zuführen. Im allgemeinen werden 0,005 bis 5 Gewichtsteile Initiator über eine wäßrige Phase und 0 bis 1 Gewichtsteil Initiator über die organische Phase eingeführt. Vorzugsweise werden 0,05 bis 1,5 Gewichtsteile Initiator in einer wäßrigen Phase zudosiert und 0,03 bis 0,5 Gewichtsteile Initiator in der organischen Phase vorgelegt.

Kalium- und Ammoniumperoxodisulfat werden vorzugsweise eingesetzt.

Polysaccharid-Suspension und wäßrige Phase können außerdem übliche Hilfs- und Zusatzstoffe, wie Entschäumer und Komplexierungsmittel, enthalten. So kann man zur Komplexierung von Eisenspuren beispielsweise Nitrilotriacetat, Ethylendiamintetraacetat oder Diethylentriaminpentaacetat zusetzen.

Die Polymerisation wird vorzugsweise bei 50 bis 75 °C durchgeführt. Dabei wird dann die vorgelegte hydrophobe Phase auf 50 bis 75 °C erwärmt, während die wäßrige Phase mit der ungesättigten Carbonsäure meist eine Temperatur von 15 bis 40 °C aufweist. Die Reaktion wird im allgemeinen nach 0,5 bis 5 Stunden beendet.

Bei der inversen Suspensionspolymerisation wird eine Aufschlämmung von diskreten wassergequollenen Polymerteilchen erhalten, die vorzugsweise einen Feststoffgehalt von 30 bis 60 %, bezogen auf die Summe aus Polymer und Wasser, aufweist.

Eine Vernetzung kann vor, während oder nach der Polymerisation vorgenommen werden. Vorzugsweise führt man nach beendeter Polymerisation eine Teilentwässerung und eine Nachvernetzung durch. Bei der Teilentwässerung stellt man vorzugsweise einen Restwassergehalt von 10 bis 50 %, bezogen auf die Summe von Polymer und Wasser, ein. Dabei werden Restwassergehalte von 10 bis 30 % ganz besonders bevorzugt eingestellt. Die Teilentwässerung wird im allgemeinen bei 50 bis 100 °C durch azeotrope Destillation, bei der man auch Vakuum anlegen kann, durchgeführt. Dabei können übliche Entwässerungsapparaturen verwendet werden, bei denen die organische Phase zurückgeführt wird.

Während oder nach der Teilentwässerung kann eine Nachvernetzung durch Zusatz von vorzugsweise 0,005 bis 5 Gewichtsprozent Quervernetzungsmittel, bezogen auf das Pfropfpolymer, durchgeführt werden. Vorzugsweise wird zuerst die Teilentwässerung und danach die Nachvernetzung ausgeführt. Zur Nachvernetzung werden Epoxide bevorzugt eingesetzt. Dabei sind unter anderem Polyglycidylether, wie beispielsweise Ethylenglykoldiglycidylether, Polyethylenglykoldiglycidylether, Glycerintriglycidylether und Diglycerintetraglycidylether, geeignet. Außerdem sind auch Polyaldehyde, wie Glyoxal, oder Haloepoxyverbindungen, wie Epichlorhydrin, verwendbar. Diese Quervernetzungsmittel werden zweckmäßigerweise in wäßriger oder organischer Lösung zugegeben. Die Nachvernetzung erfolgt durch Erhitzen auf 50 bis 100 °C, wobei vorzugsweise auf 60 bis 80 °C erwärmt wird. Die Vernetzungsreaktion wird nach 0,5 bis 4 Stunden beendet.

Nach der Vernetzung fallen die Stärke-Pfropfpolymere in Form pulverförmiger, poröser Körner mit guter Rieselfähigkeit an. Die Körner können leicht von der kontinuierlichen, organischen Phase, beispielsweise durch Filtrieren oder Zentrifugieren, getrennt werden. Anschließend können sie nach üblichen Verfahren, beispielsweise unter Vakuum oder unter Anwendung eines Wirbelschicht-, Taumel- oder

4

Schaufel-Trockners, zu pulverförmigem Produkt getrocknet werden. Das Filtrat kann in der nächsten Polymerisationscharge wiederverwendet werden. Lösemittel und Wasser lassen sich auch destillativ vom Polymerpulver abtrennen.

Während der erfindungsgemäßen Polymerisation treten keine Temperaturspitzen und keine hohen Viskositäten auf. Das Herstellverfahren ist deshalb gut im Technikums- und Produktionsmaßstabe durchführbar.

Die Polymerisation führt zu einem einheitlich feinen Produkt mit einer engen Korngrößenverteilung. Die Bildung von grobteiligen Agglomeraten und Anbackungen ist sehr gering.

Als feinteilig werden im Sinne dieser Erfindung Produkte mit Korngrößen unter 2 mm verstanden, wobei über 85 Gewichtsprozent der Produkte Korngrößen unter 1 000 $\mu$m aufweisen sollen.

Die Produkte weisen eine schnelle und hohe Flüssigkeitsabsorption auf. Das Flüssigkeitsrückhaltevermögen ist auch unter Druck sehr hoch. Werden die Polymere in Hygieneartikel, wie z. B. Windeln, eingearbeitet, so tritt nur eine geringe Rücknässung auf.

Die Produkte eignen sich in besonderem Maße zur Einarbeitung in zellstoffhaltige, saugfähige Hygieneartikel, wie Wegwerfwindeln, Damenbinden, Wischtüchern und Krankenunterlagen. Sie können als Trockenmittel, als Quellmittel in Dichtungsmassen, als Eindickmittel sowie als Wasserspeicher oder Feuchthaltemittel in der Landwirtschaft verwendet werden.

Das erfindungsgemäße Verfahren wird in einer bevorzugten Ausführungsform so durchgeführt, daß man in einem Rührkessel einen Teil des Polysaccharids mit Hilfe eines nichtionischen Tensids in dem hydrophoben Lösemittel unter Rühren dispergiert und auf die gewünschte Polymerisationstemperatur erwärmt. Anschließend wird eine wäßrige Monomerlösung, die ungesättigte Carbonsäure, das übrige Polysaccharid, nichtionisches Tensid, Polymerisationsinitiator, gegebenenfalls ein Quervernetzungsmittel und in untergeordneten Anteilen ein hydrophobes Lösemittel enthält, zudosiert. Dabei findet eine Polymerisation mit Pfropfung statt. Nach der Polymerisation wird durch azeotrope Destillation am Wasserabscheider teilentwässert. Man führt dann eine Nachvernetzung durch und kann danach das Polymer als feinteiliges Produkt abtrennen.

Für die Beispiele, die die Erfindung verdeutlichen sollen, werden folgende Bestimmungen durchgeführt:

Flüssigkeitsrückhaltevermögen

In einem 100-ml-Zentrifugenglas werden 0,500 g Polymer mit 70 ml synthetischem Urin (Mischung aus 3 883 g destilliertem Wasser, 33,2 g NaCl, 4,0 g MgSO$_4$ $\cdot$ 7H$_2$O, 2,4 g CaCl$_2$ und 77,6 g Harnstoff) versetzt und eine Stunde unter schwachem Rühren gequollen. Danach wird die Gelphase 0,5 Stunden bei 4 500 UpM von der Solphase abzentrifugiert und gewogen.

$$\text{Absorptionsvermögen} = \frac{\text{Gelauswaage} - \text{Einwaage}}{\text{Einwaage}} \quad (g/g)$$

Saugkraft

0,100 g Polymer werden auf eine Glasfritte (Typ G3, Durchmesser 3 cm) gestreut, die mit einer mit synthetischem Urin gefüllten Bürette verbunden und auf das Niveau der Glasfritte nivelliert ist. Die absorbierte Flüssigkeitsmenge wird nach 0,5 und 5 Minuten an der Bürette gemessen.

$$\text{Saugkraft} = \frac{\text{absorbierte Flüssigkeitsmenge}}{\text{Einwaage}} \quad (g/g)$$

Der Anfangswert nach 0,5 Minuten charakterisiert die Sauggeschwindigkeit. Der Endwert nach 5 Minuten ist ein Maß für die Absorptionskapazität.

Im allgemeinen werden möglichst hohe Werte angestrebt. Als "mäßig" wird ein Bereich von 10 bis 19 g/g, als "hoch" ein Bereich vom 20 bis 24 und als "sehr hoch" ein Bereich von 25 bis 30 g/g bezeichnet.

Für die Prüfung der Produkte in zellstoffhaltigen Hygieneartikeln wird ein folgender Modellwindeltest durchgeführt:

Flüssigkeitsausbreitung und Rückwässerung in einer Modellwindel

nach Edana Nordic Nonwovens Symposium, Juni 1988, Seite 242

Aus einer aus zwei Cellulosefluff-Lagen bestehenden Inkontinenzwindel (Caducée Slipad, Fa. Mölnlycke GmbH, D-4010 Hilden) werden rechteckige Ausschnitte der Größe 14 x 38 cm geschnitten. Das aus Polypropylen bestehende Deckvlies (coverstock) wird durch ein Cellulosevlies ersetzt. Zwischen beiden Fluff-Lagen werden 5,0 g Polymer über den gesamten Querschnitt gleichmäßig verteilt eingestreut.

In die Mitte der Modellwindel werden zunächst 60 ml und nach jeweils 30 Minuten zweimal weitere 30 ml rot angefärbter synthetischer Urin aufgegeben. 30 Minuten nach der letzten Flüssigkeitsdosierung werden 80 Blatt Papierhandtücher (Apura Ecotex), deren Trockengewicht zuvor bestimmt wurde, auf die Modellwindel gelegt und 10 Minuten lang mit einem Gewicht von 21,3 kg (= 4 kg/dm$^2$) belastet. Anschließend werden die feuchten Papierhandtücher zurückgewogen.

Rückwässerung (g) = Gewicht Papierhandtücher feucht (g) - Gewicht Papierhandtücher trocken (g)

Das Flüssigkeitsrückhaltevermögen ist umso besser, je niedriger die Meßwerte für die Rückwässerung sind. Es wird folgende Klassifizierung vorgenommen:

| Rückwässerung | 40 bis 45 g | sehr gut |
|---|---|---|
| | 46 bis 50 g | gut |
| | 51 bis 60 g | mäßig |
| | 70 (Blindwert) | ohne Wirkung |

Die in den Beispielen angegebenen Ausbeuten in g beziehen sich stets auf Produkte, die 24 Stunden bei 50 °C im Vakuumtrockenschrank (15 mbar Vakuum) bis zu einem Restfeuchtegehalt von < 7 Gewichtsprozent getrocknet wurden.

Die angegebenen Viskositäten der Stärken beziehen sich auf 10%ige wäßrige Pasten bei 20 °C.

Beispiel 1

In einem 4-l-Glasreaktor, ausgerüstet mit Rührer, Stickstoffeinleitung, Dosiervorrichtungen und Wasserabscheider, werden 2 400 ml Cyclohexan vorgelegt und auf 70 °C erhitzt. Unter Rühren bei 400 UpM werden

| 4 g | native Maisstärke (der Fa. Cerestar, D-4150 Krefeld), |
|---|---|
| 4 g | Sorbitanmonolaurat (SPAN$^R$ 20 der Fa. Atlas, Wilmington, Del., USA), |
| 2 g | Polyethylenglykol mit einer Molmasse von 1 550 (POLYDIOL 1550 der Fa. Hüls AG, D-4370 Marl), |
| 0,25 g | Ammoniumperoxodisulfat in 30 ml Wasser und |
| 50 mg | Ethylendiamintetraacetat (Na-Salz) |

dispergiert.

Mit Stickstoff wird dann Sauerstoff verdrängt und eine Mischung aus

| 312 g | Acrylsäure, |
|---|---|
| 480 g | 25%iger Natronlauge, |
| 42 g | nativer Maisstärke, |
| 12 g | Sorbitanmonolaurat, |
| 0,1 g | Trimethylolpropantriacrylat, |
| 0,5 g | Ammoniumperoxodisulfat in 15 ml Wasser und |
| 20 ml | Cyclohexan |

in 45 Minuten zudosiert. Es wird eine halbe Stunde nachgerührt. Dann werden 280 ml Wasser azeotrop bei 75 °C abdestilliert, worauf bei 70 °C 0,25 g Ethylenglykoldiglycidether in 5 ml Wasser zugesetzt werden.

Man rührt 2 Stunden nach und filtriert das pulverförmige Produkt ab.

Ausbeute: 402 g Produkt mit einem Feststoffgehalt von 96 %

Die durch Siebanalyse bestimmte Kornverteilung sowie die Absorptionseigenschaften gehen aus Tabelle 1 hervor.

## Beispiel 2

Es wird wie in Beispiel 1 verfahren, jedoch keine native Maisstärke im Cyclohexan vorgelegt. Dafür werden 46 g native Maisstärke mit der Acrylatlösung zudosiert. Der Polymerisationsverlauf und die Teilchenstruktur entsprechen dem nach Beispiel 1 hergestellten Produkt.

Ausbeute: 406 g Produkt mit einem Feststoffgehalt von 96 Gew.-%

## Vergleichsbeispiel A

Es wird wie in Beispiel 1 verfahren. Man legt jedoch die Gesamtmenge an nativer Maisstärke (46 g), dispergiert in Cyclohexan, vor. Nach Beendigung der Zudosierung der wäßrigen Lösung ist der Reaktorinhalt hochviskos, kaum rührfähig und verbackt teilweise. Während der azeotropen Entwässerung, wobei 280 ml Wasser abdestilliert werden, wird die Rührfähigkeit besser.

Es werden 416 g eines hochporösen, aus feinen Partikeln lose zusammengesetzten Produkts mit einem hohen Grobkornanteil (vgl. Tabelle 1) erhalten.

## Beispiel 3

In der in Beispiel 1 verwendeten Polymerisationsapparatur werden 1 800 ml Cyclohexan vorgelegt und auf 70 °C erhitzt. Unter Rühren bei 400 UpM werden

| | |
|---|---|
| 4 g | native Maisstärke, |
| 5 g | Sorbitanmonolaurat, |
| 2,5 g | Polyethylenglykol mit einer Molmasse von 1 550, |
| 0,25 g | Ammoniumperoxodisulfat in 30 ml Wasser und |
| 50 mg | Ethylendiamintetraacetat (Na-Salz) |

dispergiert. Mit Stickstoff wird dann Sauerstoff verdrängt und eine Mischung aus

| | |
|---|---|
| 312 g | Acrylsäure, |
| 480 g | 25%iger Natronlauge, |
| 42 g | nativer Maisstärke, |
| 10 g | Sorbitanmonolaurat, |
| 0,1 g | Pentaerythrittriacrylat, |
| 0,3 g | Ammoniumperoxodisulfat in 15 ml Wasser und |
| 20 ml | Cyclohexan |

in 45 Minuten zudosiert. Es wird eine halbe Stunde nachgerührt. Während der Polymerisation wird kein Verkleben der Polymerteilchen festgestellt. Dann werden 280 ml Wasser azeotrop bei 75 °C abdestilliert und 0,25 g Ethylenglykoldiglycidylether in 5 ml Wasser zugesetzt. Anschließend wird 2 Stunden bei 70 °C nachgerührt. Es werden 404 g eines feinteiligen, kompakten Polymerpulvers erhalten, das zu 95 % aus der Nutzfraktion von 90 bis 800 $\mu$m besteht.

## Beispiel 4

Es wird wie in Beispiel 1 verfahren. Man verwendet jedoch dünnkochende Stärke mit einer Viskosität von 127 mPa s (AMISOL[R] 05515 der Fa. Cerestar).

Es werden 409 g eines feinteiligen Produkts erhalten, das zu 96 % aus der Nutzfraktion von 90 bis 800 $\mu$m besteht.

## Vergleichsbeispiel B

Es wird wie in Beispiel 4 verfahren. Man legt jedoch die gesamte Stärkemenge (46 g) in der Cyclohexanphase vor. Die Acrylatlösung wird stärkefrei dosiert. Nach Beendigung der Acrylatzugabe ist das Reaktionsgemisch hochviskos, und die Polymerteilchen backen zusammen.

Es werden 396 g eines grobteiligen Produkts erhalten, das zu 100 % aus > 2 mm großen agglomerisierten Teilchen besteht. Das Produkt wird für die Bestimmung der Absorptionseigenschaften durch Mahlen auf eine Korngröße < 800 $\mu$ zerkleinert.

Beispiel 5

In einem 4-l-Glasreaktor, ausgerüstet mit Rührer, Stickstoffeinleitung, Dosiervorrichtung und Wasserabscheider, werden 2 000 ml Cyclohexan vorgelegt und auf 70 °C erhitzt. Unter Rühren bei 400 UpM werden

| | |
|---|---|
| 5 g | native Maisstärke, |
| 5 g | Sorbitanmonolaurat, |
| 2,5 g | Polyethylenglykol mit einer Molmasse von 1 550, |
| 0,25 g | Ammoniumperoxodisulfat in 8 ml Wasser und |
| 50 ml | Ethylendiamintetraacetat (Na-Salz) in 8 ml Wasser |

dispergiert. Mit Stickstoff wird dann Sauerstoff verdrängt und eine Mischung aus

| | |
|---|---|
| 312 g | Acrylsäure, |
| 480 g | 25%iger Natronlauge, |
| 70 g | nativer Maisstärke, |
| 10 g | Sorbitanmonolaurat, |
| 0,1 g | Pentaerythrittriacrylat, |
| 0,3 g | Ammoniumperoxodisulfat in 15 ml Wasser und |
| 20 ml | Cyclohexan |

in 45 Minuten zudosiert. Es wird eine halbe Stunde nachgerührt. Dann werden 330 ml Wasser azeotrop bei 75 °C abdestilliert, worauf bei 70 °C 0,25 g Ethylenglykoldiglycidylether in 8 ml Wasser zugesetzt werden. Man rührt 2 Stunden nach, filtriert das pulverförmige Produkt ab, das aus kompakten, porösen Partikeln besteht.

Ausbeute:     455 g Produkt

Beispiel 6

Es wird wie in Beispiel 5 verfahren. Die gesamte Stärkemenge (75 g) wird jedoch mit der Acrylatphase zudosiert. Der Stärkegehalt im getrockneten Polymerpulver (Ausbeute 460 g) liegt wie im Beispiel 5 bei 16 Gewichtsprozent.

Vergleichsbeispiel C

Es wird wie in Beispiel 5 verfahren. Die gesamte Stärkemenge (75 g) wird jedoch in der Cyclohexanphase eingesetzt. Nach Beendigung der Zudosierung der wäßrigen Lösung ist das Reaktionsgemisch hochviskos und nur teilweise durchmischt. Die Polymerteilchen backen zusammen. Während der azeotropen Entwässerung läßt die Verbackung nach. Nach Abdestillieren von 330 ml Wasser und Vernetzung mit 0,25 g Ethylenglykoldiglycidylether werden 440 g eines pulverförmigen Produkts erhalten.

Beispiel 7

In einem 1 200 l fassenden Polymerisationskessel aus V4A-Stahl, der mit einem zweiflügligen Intermig-Rührer, Rückflußkühler, Wasserauskreiser und Zulaufeinrichtungen ausgestattet ist, werden

| | |
|---|---|
| 620 kg | Cyclohexan, |
| 1,3 kg | native Maisstärke, |
| 1,4 kg | Sorbitanmonolaurat, |
| 0,7 kg | Polyethylenglykol mit einer Molmasse von 1 550, |
| 20 g | Ethylendiamintetraacetat, gelöst in 1 l Wasser, und |
| 50 g | Ammoniumperoxodisulfat, gelöst in 1 l Wasser, |

vorgelegt. Der Kesselinhalt wird unter Rühren auf 68 °C aufgeheizt und mit Stickstoff gespült. Innerhalb einer Stunde fügt man eine Mischung, die man durch Neutralisieren von 95 kg Acrylsäure mit 147 kg 25%iger Natronlauge und Zusatz von 25 l Cyclohexan, 4,2 kg Sorbitanmonolaurat, 13 kg nativer Maisstärke und 30 g Trimethylolpropantriacrylat erhält, unter Rühren des Reaktionsgemisches bei 80 UpM hinzu. Mit getrennter Dosierung wird außerdem eine Aktivatorlösung von 150 g Ammoniumperoxodisulfat in 4,5 l Wasser zugesetzt. Nach Beendigung der Dosierung der Acrylatphase und der Aktivatorlösung wird noch eine halbe Stunde bei 70 °C nachgerührt. Danach werden 95 kg Wasser azeotrop bei 600 hPa abdestilliert und 78 g Ethylenglykoldiglycidylether, gelöst in 2,5 l Wasser, zugesetzt. Man rührt zwei Stunden nach und fügt noch 1 400 g pyrogene Kieselsäure (AEROSIL[R] 200 der Fa. Degussa, D-6000 Frankfurt) in Form einer Aufschlämmung in 25 l Cyclohexan zu.

Das Polymerisat wird vom Cyclohexan abfiltriert und bei 60 °C im Schaufeltrockner auf einen Restfeuchtegehalt von 4,8 % getrocknet. Man erhält 138 kg eines feinteiligen, 10,4 Gewichtsprozent Stärke enthaltenden Polymerisats, dessen Korngröße zu 100 % aus der Nutzfraktion von 90 bis 800 $\mu$m besteht.

Beispiel 8

Es wird wie im Beispiel 5 verfahren. Dabei werden jedoch

| | |
|---|---|
| 16 g | native Maisstärke, |
| 5 g | Sorbitanmonolaurat, |
| 2 g | Polyethylenglykol mit einer Molmasse von 1 550, |
| 0,25 g | Ammoniumperoxodisulfat in 8 ml Wasser und |
| 66 ml | Ethylendiamintetraacetat (Na-Salz) in 8 ml Wasser |

in 2 000 ml Cyclohexan dispergiert. Mit Stickstoff wird dann Sauerstoff verdrängt und eine Mischung aus

| | |
|---|---|
| 312 g | Acrylsäure, |
| 480 g | 25 %iger Natronlauge, |
| 144 g | nativer Maisstärke, |
| 10 g | Sorbitanmonolaurat, |
| 0,1 g | Trimethylolpropantriacrylat, |
| 0,3 g | Ammoniumperoxodisulfat in 15 ml Wasser und |
| 20 ml | Cyclohexan |

in 50 Minuten zudosiert. Es wird eine halbe Stunde nachgerührt. Dann werden 330 ml Wasser azeotrop bei 75 °C abdestilliert, worauf bei 70 °C 0,50 g Ethylenglykoldiglycidylether in 8 ml Wasser zugesetzt werden. Man rührt 2 Stunden nach, filtriert das pulverförmige Produkt ab, das aus kompakten, porösen Partikeln besteht.

Ausbeute:    545 g Produkt.

Aus der folgenden Tabelle 1 geht hervor, daß sich die erfindungsgemäßen Produkte gegenüber den Vergleichsprodukten durch eine feinere Teilchengröße, engere Korngrößenverteilung, geringeren Anteil von Grobkorn, eine deutlich höhere Endsaugkraft und durch eine deutlich bessere Flüssigkeitsretention in zellstoffhaltigen Windeln, ausgedrückt in geringeren Meßwerten für die Rücknässung, auszeichnen.

Tabelle 1

| Bsp. | Siebanalyse Gew.-% Grobkorn > 800 μm | Siebanalyse Gew.-% Nutzfraktion 90 - 800 μm | Absorptionsvermögen g/g an synthetischem Urin | Saugkraft g/g an synthetischem Urin nach 30 sec. | Saugkraft g/g an synthetischem Urin nach 300 sec. | Saugkraft Beurteilung | Modellwindeltest Rücknässung (g) | Modellwindeltest Beurteilung |
|---|---|---|---|---|---|---|---|---|
| 1 | 8 | 92 | 34 | 16 | 29 | sehr hoch | 41 | sehr gut |
| 2 | 10 | 90 | 34 | 13 | 27 | sehr hoch | 43 | sehr gut |
| A | 67 | 33 | 33 | 17 | 21 | hoch | 52 | mäßig |
| 3 | 5 | 95 | 44 | 7 | 30 | sehr hoch | 42 | sehr gut |
| 4 | 4 | 96 | 37 | 7 | 19 | mäßig | 50 | gut |
| B | 100 | 0 | 31 | 10 | 16 | mäßig | 54 | mäßig |
| 5 | 2 | 98 | 36 | 18 | 28 | sehr hoch | 46 | gut |
| 6 | 3 | 97 | 33 | 13 | 25 | sehr hoch | 50 | gut |
| C | 6 | 94 | 31 | 19 | 21 | hoch | 53 | mäßig |
| 7 | 0 | 100 | 36 | 14 | 26 | sehr hoch | 47 | gut |
| 8 | 1 | 99 | 28 | 21 | 25 | sehr hoch | 50 | gut |

**Patentansprüche**

1. Verfahren zur Herstellung von feinteiligen, wasserquellbaren Polysaccharid-Pfropfpolymeren durch inverse Suspensionspolymerisation von 5 bis 40 Gewichtsteilen Polysaccharid und 95 bis 60 Gewichtsteilen einer olefinisch ungesättigten Carbonsäure und durch Vernetzung,
dadurch gekennzeichnet,
daß man bei der inversen Suspensionspolymerisation ein hydrophobes Lösemittel, das 0 bis 25 Gewichtsprozent des Polysaccharids enthält, bei 40 bis 100 °C vorlegt und eine wäßrige Phase, die die olefinisch ungesättigte Carbonsäure, Polymerisationsinitiator und 100 bis 75 Gewichtsprozent des Polysaccharids enthält, zudosiert.

2. Verfahren nach Anspruch 1,
dadurch gekennzeichnet,
daß man als Polysaccharid eine Stärke einsetzt.

3. Verfahren nach Anspruch 1,
dadurch gekennzeichnet,
daß man 2 bis 20 Gewichtsprozent des Polysaccharids in dem hydrophoben Lösemittel dispergiert.

4. Verfahren nach Anspruch 1,
dadurch gekennzeichnet,
daß das hydrophobe Lösemittel ein aliphatischer oder cycloaliphatischer Kohlenwasserstoff ist.

5. Verfahren nach Anspruch 1,
dadurch gekennzeichnet,
daß man bei der inversen Suspensionspolymerisation ein nichtionisches Tensid mit einem Hydrophil-Lipophil-Gleichgewicht von 0,5 bis 10 als Dispergiermittel verwendet.

6. Verfahren nach Anspruch 1,
dadurch gekennzeichnet,
daß man eine zu 50 bis 90 % neutralisierte Acrylsäure oder Methacrylsäure einsetzt.

7. Verfahren nach Anspruch 1,
dadurch gekennzeichnet,
daß man nach der Polymerisation eine Teilentwässerung und eine Nachvernetzung durchführt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| P,Y | EP-A-0 455 965 (STARCHEM GMBH)<br>* Ansprüche *<br>* Beispiele *<br>--- | 1-7 | C08F251/00<br>//(C08F251/00,<br>220:06) |
| P,Y | EP-A-0 441 197 (BASF AG)<br>* Ansprüche 1-3 *<br>--- | 1-7 | |
| D,A | DE-B-2 840 010 (NATIONAL STARCH AND CHEMICAL CORP)<br>* Ansprüche *<br>* Beispiel 1 *<br>* Spalte 4, Zeile 1 - Zeile 59 *<br>* Spalte 5, Zeile 61 - Spalte 6, Zeile 24 *<br>--- | 1-5 | |
| D,A | DE-A-3 801 633 (STARCHEM GMBH)<br>* Ansprüche *<br>* Beispiele *<br>--- | 1-7 | |
| A | EP-A-0 242 529 (HÜLS AG)<br>* Ansprüche *<br>* Seite 4, Zeile 23 - Seite 5, Zeile 8 *<br><br>----- | 1-6 | RECHERCHIERTE SACHGEBIETE (Int. Cl.5)<br><br>C08F |

Der vorliegende Recherchenbericht wurde für alle Patentansprüche erstellt

| Recherchenort | Abschlußdatum der Recherche | Prüfer |
|---|---|---|
| DEN HAAG | 18 MAI 1992 | PERSSON E.K. |